# DEMANDE DE BREVET EUROPEEN

(11) **EP 3 839 550 A1**
(43) Date de publication de la demande: **23.06.2021**
(21) Numéro de dépôt: 20214173.5
(22) Date de dépôt: 15.12.2020
(51) Int. Cl.: G01S 5/02

(54) **PROCEDE DE GEOLOCALISATION D'OBJETS CONNECTES ET DISPOSITIF ASSOCIE**

(30) Priorité: 19.12.2019 FR 1914889
(71) Demandeur: Sagemcom Energy & Telecom SAS, 92500 Rueil-Malmaison (FR)
(72) Inventeur: BILLET, Claire, 92500 RUEIL MALMAISON (FR); LEBRUN, Justine, 92500 RUEIL MALMAISON (FR)
(74) Mandataire: Cabinet Le Guen Maillet

(57) **Abrégé**

L'invention concerne un procédé de localisation d'un objet dans un plan, le procédé comprenant une première phase dite phase d'apprentissage pour renseigner une base de données, et une seconde phase dite phase de localisation, la phase de localisation utilisant un classifieur opérant à partir de la base de données comprenant des informations représentatives de la transmission de signaux entre l'objet et des antennes, pour déterminer une probabilité de localisation de l'objet dans des zones du plan, la phase de localisation utilisant en outre un réseau de neurones, pour déterminer, pour la zone du plan pour laquelle la probabilité de localisation est la plus élevée, la position de l'objet sous forme de coordonnées dans le plan. L'invention concerne également un dispositif de localisation implémentant le procédé.

## Description

### DOMAINE TECHNIQUE

La présente invention concerne le domaine de la géolocalisation de dispositifs en intérieur et en extérieur. La présente invention concerne plus particulièrement la géolocalisation de dispositifs transmettant des signaux radioélectriques vers un réseau d'antennes, le réseau d'antennes présentant une densité d'antennes hétérogène.

### ETAT DE LA TECHNIQUE ANTERIEURE

Des techniques de localisation utilisant un filtrage par filtre de Kalman étendu sont connues et utilisent des niveaux d'émission ainsi que des niveaux de rapport signal à bruit. Ces techniques sont efficaces pour géolocaliser des objets fixes ou peu mobiles, mais apparaissent peu adaptées pour localiser des objets mobiles, tels que des objets embarqués dans des véhicules, par exemple.

D'autres techniques de localisation sont particulièrement bien adaptées pour opérer une localisation en intérieur, notamment pour localiser des objets connectés à un réseau sans fil de type WIFI. Le document intitulé « A deep learning approach to fingerprinting indoor localization solution » (L. Xiao, 2017) décrit une méthode utilisant de telles techniques, s'appuyant sur un réseau de neurones et appliquées à un réseau privé dans un périmètre restreint. Cette méthode n'est pas adaptée à une géolocalisation en extérieur, pour localiser des objets transmettant vers des antennes potentiellement éparses.

La demande de brevet FR3068141 décrit une autre méthode de localisation utilisant le WIFI et un réseau LPWAN. Cette méthode est performante avec un maillage dense.

Enfin une méthode dite de «fingerprinting » existe, et qui utilise une base de données composée de valeurs de niveau de signal reçu couplées à des positions réelles d'un objet. La position d'un objet à localiser est estimée par comparaison avec les valeurs de niveau de signal reçu enregistrées dans la base. Selon cette méthode, la position dans la base de données ayant la valeur de niveau de signal reçu, la plus proche du niveau de signal reçu en provenance de l'objet à localiser, est considérée comme la position de l'objet. La localisation attribue donc une position déjà répertoriée qui peut être éloignée de la position réelle.

Ces méthodes ne sont pas optimales pour une localisation utilisant un réseau d'antennes à densité hétérogène et apparaissent peu adaptées à des géolocalisations en extérieur. La situation peut être améliorée.

### EXPOSE DE L'INVENTION

La présente invention vise notamment à optimiser la précision de géolocalisation d'un objet émettant des signaux vers un réseau d'antennes de densité d'antennes hétérogène.

A cet effet, l'invention a pour objet de proposer un procédé de localisation d'un objet dans un plan, l'objet émettant des signaux radioélectriques vers une pluralité d'antennes de réception positionnées dans le plan, les antennes de réception étant chacune combinées à un dispositif de réception configuré pour délivrer au moins une information représentative de la transmission desdits signaux depuis l'objet vers ladite antenne, le procédé comprenant une phase d'apprentissage, laquelle comprend :
- i) découper l'espace en zones comprenant chacune une seule des antennes de réception,
- ii) enregistrer, dans une base de données, pour chaque position parmi une pluralité de positions connues de l'objet dans le plan, l'au moins une information représentative de la transmission desdits signaux depuis l'objet vers chacune des antennes, la position de l'objet sous forme de coordonnées dans le plan, et un identifiant de la zone,
- iii) entraîner éventuellement un classifieur à déterminer une probabilité de localisation d'un objet dans chacune des zones du plan, et entraîner un réseau de neurones à déterminer une localisation d'un objet dans chacune des zones du plan A, à partir des informations enregistrées dans la base de données,
le procédé comprenant en outre une phase de géolocalisation d'un objet dans le plan, laquelle comprend :
- iv) recevoir, depuis l'objet et par la pluralité d'antennes, des signaux radioélectriques et définir au moins une information représentative de la transmission de signaux depuis l'objet vers chacune des antennes,
- v) déterminer, par le classifieur, à partir de l'ensemble des informations représentatives de la transmission des signaux entre l'objet et chaque antenne, une probabilité de localisation de l'objet dans chacune des zones du plan,
- vi) déterminer, grâce à un réseau de neurones, pour la zone pour laquelle la probabilité de localisation est la plus élevée, la position de l'objet sous forme de coordonnées dans le plan.

Avantageusement, il est ainsi possible de définir d'abord une probabilité de présence de l'objet à localiser dans chacune des zones définies par la découpe du plan, puis de déterminer à l'aide d'un réseau de neurones entraîné pour ce faire, la localisation de l'objet dans la zone sous forme de coordonnées dans le plan. Ce procédé en deux étapes permet d'obtenir une localisation plus précise de l'objet dans le plan, de façon rapide.

Un autre avantage réside dans le fait que, lorsque des probabilités de localisation dans des zones ne sont pas suffisamment discriminatoires pour « élire » une zone comme présentant distinctement la probabilité la plus forte, une nouvelle itération de la détermination des probabilités de localisation de l'objet dans chaque zone peut être réitérée, par utilisation du classifieur, pour accroître la précision des probabilités définies par zone.

Le procédé de localisation d'un objet selon l'invention peut également comporter les caractéristiques suivantes, considérées seules ou en combinaison :
- La découpe du plan en zones est réalisée selon un diagramme de Voronoï à partir d'un ensemble discret de points définis dans le plan par les positions respectives des antennes de réception.
- La découpe du plan en zones est réalisée selon une méthode de segmentation dite « de la ligne de partage des eaux », une méthode de segmentation dite de « croissance de région » ou encore une méthode de partitionnement dite « en K-moyennes ».
- Le classifieur utilise une méthode d'apprentissage statistique utilisant une forêt d'arbres décisionnels.
- Le procédé est utilisé pour la localisation d'un objet connecté à un réseau de télécommunications.

Un autre objet de l'invention est de proposer un dispositif de localisation d'un objet dans un plan, l'objet émettant des signaux radioélectriques vers une pluralité d'antennes de réception positionnées dans le plan, les antennes de réception étant chacune positionnées dans une zone prédéfinie du plan contenant une seule antenne et les antennes étant chacune combinées à un dispositif de réception configuré pour délivrer au moins une information représentative de la transmission desdits signaux depuis l'objet vers ladite antenne, le dispositif de localisation comprenant une base de données comprenant pour chaque position parmi une pluralité de positions connues de l'objet dans le plan, au moins une information représentative de la transmission desdits signaux depuis l'objet vers chacune des antennes, la position de l'objet sous forme de coordonnées dans le plan, et un identifiant d'une zone comprenant ladite position parmi une pluralité de zones du plan, le dispositif de localisation comprenant :
- une interface de réception configurée pour recevoir, au moins une information représentative de la transmission de signaux depuis l'objet vers chacune des antennes de la pluralité d'antennes,
- un classifieur configuré pour déterminer, à partir de l'ensemble des informations représentatives de la transmission des signaux entre l'objet et chaque antenne, une probabilité de localisation de l'objet dans chacune des zones du plan,
- un réseau de neurones pour déterminer, pour la zone pour laquelle la probabilité de localisation de l'objet est la plus élevée, la position de l'objet sous forme de coordonnées dans le plan.

Le dispositif de localisation d'un objet selon l'invention peut également comporter les caractéristiques suivantes, considérées seules ou en combinaison :
- Le classifieur est configuré pour implémenter une méthode d'apprentissage statistique utilisant une forêt d'arbres décisionnels.
- Le dispositif comprend un réseau de neurones pour chacune des zones du plan découpé.
- Le ou les réseaux de neurones sont caractérisés par une taille de vecteur d'entrée et une taille de vecteur de sortie et comprennent une couche dense composée de *m* neurones, *m* étant un entier positif correspondant à la moitié de la somme de la taille du vecteur d'entrée et de la taille du vecteur de sortie, la couche dense étant entièrement connectée, une couche de dropout de 50% et une couche de sortie de dimension deux.

L'invention a également pour objet un produit programme d'ordinateur comprenant des instructions de codes de programme pour exécuter les étapes du procédé précédemment décrit lorsque le programme est exécuté par un processeur, ainsi qu'un support de stockage d'informations comprenant un tel produit programme d'ordinateur.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre un réseau de télécommunications comprenant une pluralité d'antennes réparties dans un plan ainsi qu'un objet à localiser par un dispositif de localisation selon un mode de réalisation particulier et non limitatif de l'invention.
[Fig. 2] illustre une découpe du plan déjà représenté sur la Fig. 1 en une pluralité de zones comprenant chacune une antenne.
[Fig. 3] illustre des positions connues d'un ou plusieurs objets dans le plan déjà représenté sur les Fig. 1 et Fig. 2, utilisées par le dispositif selon l'invention, pour opérer une phase d'apprentissage.
[Fig. 4] représente la répartition de positions connues d'un ou plusieurs objets, dans chacune des zones, pour illustrer la phase d'apprentissage du dispositif selon l'invention.
[Fig. 5] est une représentation schématique d'une transmission de signaux radioélectriques, depuis un objet à localiser vers chacune des antennes du plan.
[Fig. 6] est un ordinogramme représentant des étapes du procédé de localisation, selon un mode de réalisation particulier et non limitatif de l'invention, exécuté dans le dispositif de localisation représenté sur la Fig. 1.
[Fig. 7] est une représentation schématique de l'architecture interne d'un dispositif de localisation d'un objet selon un mode de réalisation particulier et non limitatif de l'invention.

### EXPOSE DETAILLE DE MODES DE REALISATION

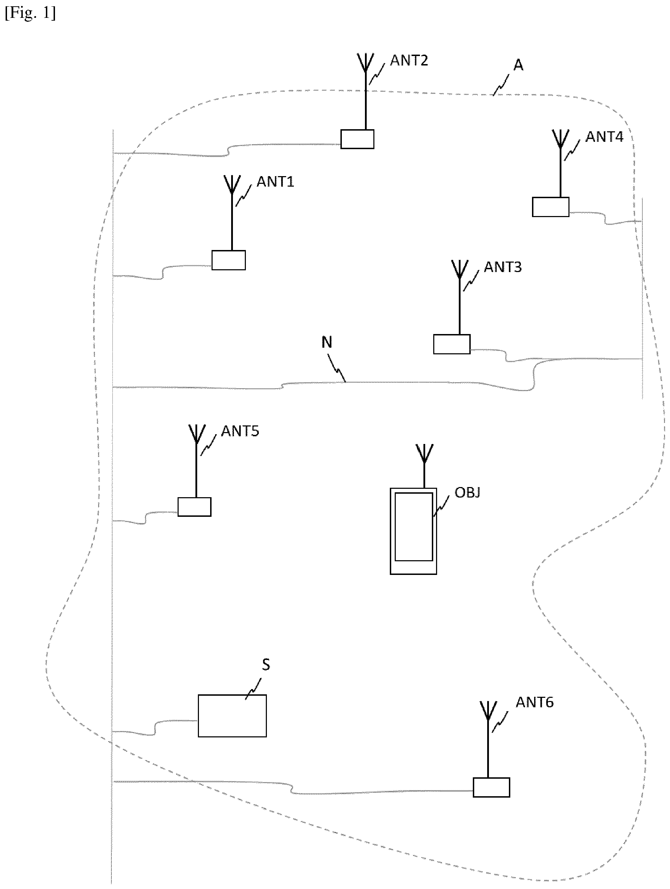

La **Fig. 1** montre un plan A comprenant un réseau de télécommunications N utilisant une pluralité d'antennes de télécommunications ANT1, ANT2, ANT3, ANT4, ANT5 et ANT6 configurées pour recevoir des signaux radioélectriques émis depuis le plan A ou pour émettre des signaux radioélectriques vers n'importe quel point du plan A. Le terme plan est à interpréter comme un espace plan ou quasi-plan. Ainsi le plan A peut correspondre par exemple à un territoire tel qu'une parcelle de terrain, une commune, un ensemble de communes, un département ou une région, ces exemples étant non limitatifs.

Selon cette configuration, une antenne parmi les antennes ANT1 à ANT6 ne couvre pas obligatoirement la totalité du plan A, mais les antennes ANT1 à ANT6 couvrent ensemble, la totalité du plan A. Dans la description qui va suivre, il n'est pas fait considération des phénomènes de propagation des ondes et des perturbations généralement rencontrées du fait du relief ou de la présence d'obstacles, et il est donc considéré que chaque antenne peut recevoir des signaux radioélectriques depuis n'importe quel point du plan A (encore appelé position), quitte à ce que l'amplitude du signal vu d'une antenne soit considérée comme nulle ou que le temps d'arrivée du signal ne puisse pas être défini.

Chacune des antennes ANT1 à ANT6 est connectée à un dispositif lui-même relié au réseau de télécommunications N de sorte que les signaux radioélectriques reçus par une antenne puissent être traités par le dispositif connecté relié à cette antenne et qu'une ou plusieurs informations représentatives de la transmission de signaux radioélectriques reçus par une antenne puissent être transmis par l'intermédiaire du réseau de télécommunications N. Un dispositif de localisation S est également connecté au réseau de télécommunications N. Le dispositif S est configuré pour opérer une localisation d'un objet OBJ présent dans le plan A. L'objet OBJ est un objet connecté au réseau de télécommunications N par l'intermédiaire d'une ou plusieurs antennes parmi les antennes ANT1 à ANT6. L'objet OBJ est par exemple un smartphone, une borne de localisation, une montre intelligente, un dispositif électronique dit « intelligent », un compteur électrique connecté, un véhicule, ces exemples n'étant bien évidemment pas limitatifs. L'objet OBJ est plus largement n'importe quel objet susceptible d'émettre des signaux radioélectriques pouvant être captés par l'une ou plusieurs des antennes ANT1 à ANT6, les signaux radioélectriques pouvant être convertis en une ou plusieurs informations représentatives de leur transmission entre l'objet OBJ et la ou les antennes recevant ces signaux radioélectriques. Selon l'exemple décrit, six antennes couvrent le plan A et présentent une densité de répartition hétérogène dans le plan A.

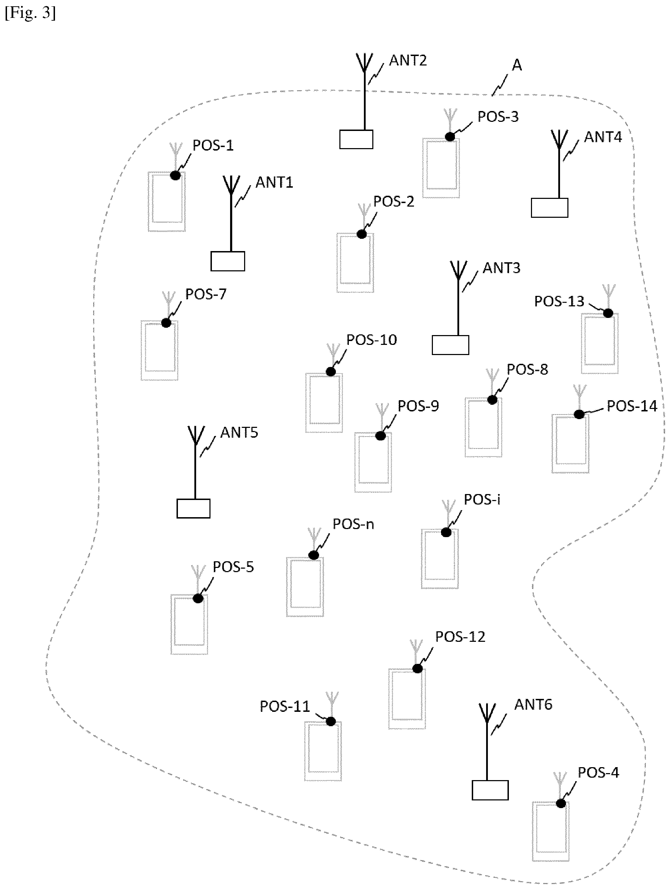

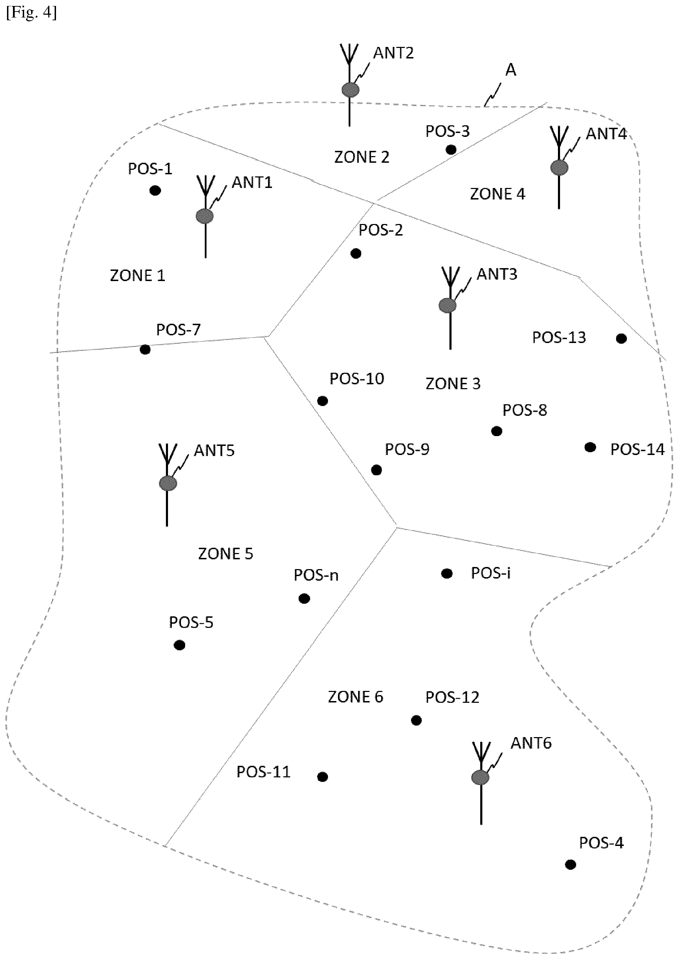

Le dispositif S est configuré pour exécuter le procédé selon l'invention, lequel comprend une phase d'apprentissage et une phase de localisation. La phase de localisation permet la localisation de l'objet OBJ ou d'un objet similaire à l'objet OBJ, au terme de la phase d'apprentissage. La phase d'apprentissage requiert une découpe du plan A en une pluralité de zones, encore appelées cellules. Durant la phase d'apprentissage, le dispositif de localisation S enregistre dans une base de données une ou des caractéristiques représentatives de la transmission de signaux radioélectriques depuis un ou plusieurs objets OBJ, à partir de positions réelles, connues. Le terme « position réelle » est à interpréter comme désignant une position mesurée au moyen d'un système de mesure, tel qu'un dispositif GPS, par exemple, par opposition à une position estimée. Pour une position donnée d'un objet, considérée pour la phase d'apprentissage, la ou les caractéristiques relevées sont associées à la position réelle dans la base de données, ainsi qu'à une information représentative de la zone dans laquelle se situe la position faisant l'objet d'une mesure à enregistrer (sous forme d'un échantillon dans la base). La base de données de caractéristiques est préférentiellement comprise dans le dispositif de localisation S. Selon une variante, la base de données peut être implémentée dans un autre dispositif connecté au réseau de télécommunications N, ou à un autre réseau connecté au réseau de télécommunications N, cette localisation présentant toutefois l'inconvénient d'ajouter des temps de traitement supplémentaires pour renseigner ou consulter la base de données à partir du dispositif de localisation S.

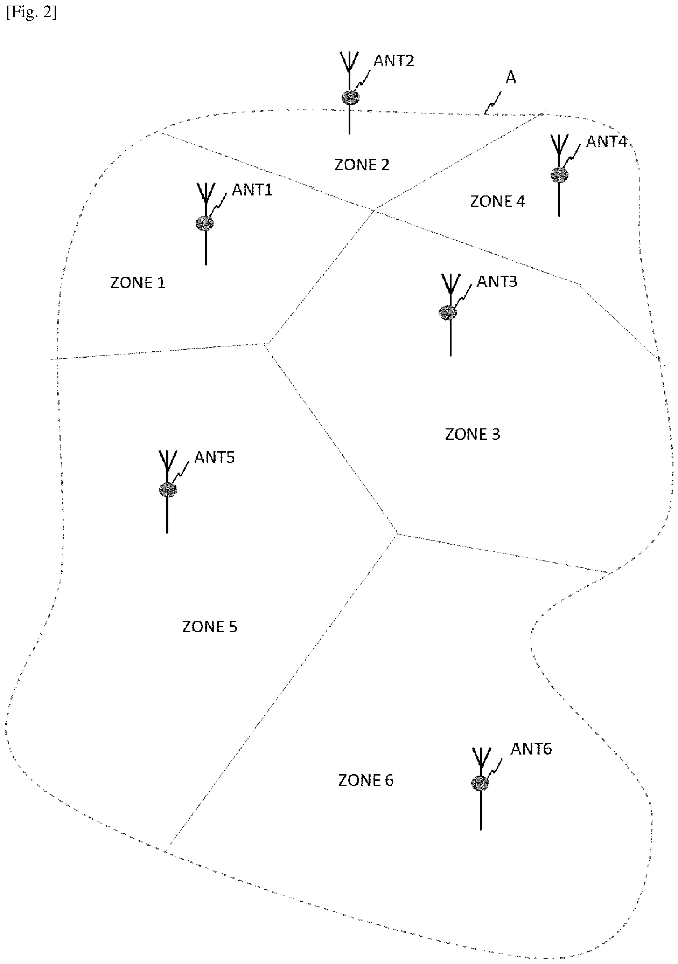

La **Fig. 2** illustre une découpe du plan A en une pluralité de zones ZONE1, ZONE2, ZONE3, ZONE4, ZONE5 et ZONE6 par une méthode de découpe selon l'algorithme de Voronoï. Selon le mode de réalisation préféré de l'invention, le plan A est découpé en plusieurs zones selon cet algorithme. Un diagramme de Voronoï est un espace divisé en cellules contenant chacune un point, de sorte que chaque endroit de chaque cellule est plus proche du point qui se trouve dans cette cellule que de tous les autres points des autres cellules. Les limites des cellules représentent les emplacements équidistants de deux points ou plus. Il est alors considéré qu'une cellule est la zone d'influence d'un point. Ainsi, la méthode de découpe de Voronoï appliquée au plan A comprenant la pluralité d'antennes ANT1 à ANT6 définit les zones ZONE1 à ZONE6, comprenant chacune une antenne, et pour lesquelles chaque endroit d'une zone est plus proche de l'antenne située dans cette zone que d'une quelconque autre antenne. Le choix de la méthode de découpe selon l'algorithme de Voronoï n'est pas limitatif et la découpe peut, selon des variantes, être réalisée selon une autre méthode de découpe ou de segmentation. La découpe du plan en zones peut, par exemple, être réalisée selon une méthode de segmentation dite «de la ligne de partage des eaux », une méthode de segmentation dite de « croissance de région » ou encore une méthode de partitionnement dite « en K-moyennes ».
Des positions réelles POS-1, POS-2, ... POS-i, ...POS-n sont utilisées pour la phase d'apprentissage. Ces n positions réelles sont représentées sur la **Fig. 3** qui fait apparaître autant d'objets OBJ que de positions réelles, répartis dans le plan A, parmi les antennes ANT1 à ANT6. Les n positions peuvent correspondre indifféremment à des positions successives d'un même objet OBJ ou à des positions de différents objets OBJ similaires. Selon un mode de réalisation préféré de l'invention, deux paramètres représentatifs de la transmission de signaux radioélectriques entre un objet OBJ positionné à une position POS-i et chacune des antennes parmi les antennes ANT1 à ANT6 sont enregistrées dans la base de données pendant la phase d'apprentissage, en même temps que des coordonnées X et Y de la position POS-i et qu'un identifiant de la zone du plan A dans laquelle se trouve la position POS-i. Selon le mode de réalisation préféré de l'invention, les deux paramètres enregistrés dans la base, représentatifs d'une transmission entre un objet OBJ, depuis une position réelle POS-i, et une antenne parmi ANT1 à ANT6, sont le RSS (du sigle anglais « Received Signal Strengh » et qui signifie « niveau de signal reçu ») et le TDOA (du sigle anglais « Time Différence Of Arrivai » et qui signifie « différence de temps d'arrivée), et X et Y sont la longitude et la latitude d'une position POS-i, déterminées par un dispositif de localisation de type GPS. La zone dans laquelle se trouve la POS-i est déterminée par comparaison des coordonnées avec le diagramme de Voronoï, lequel est calculé à partir de la forme du plan A et des positions des antennes ANT1 à ANT6 dans le plan A. La **Fig.4** illustre la répartition des positions réelles POS-1 à POS-n dans le plan A, par zone. Les positions réelles POS-1 à POS-n sont réparties dans les zones ZONE1 à ZONE6 selon le diagramme de Voronoï calculé à partir de la forme du plan A et de l'implantation des antennes ANT1 à ANT6. Selon la répartition, les positions réelles POS-1 et POS-7 se situent dans la zone ZONE1, la position POS-3 se situe dans la zone ZONE 2, les positions réelles POS-2, POS-8, POS-9, POS-10, POS-13, POS-14, se situent dans la zone ZONE 3, etc. comme cela est illustré sur la **Fig.4****.**

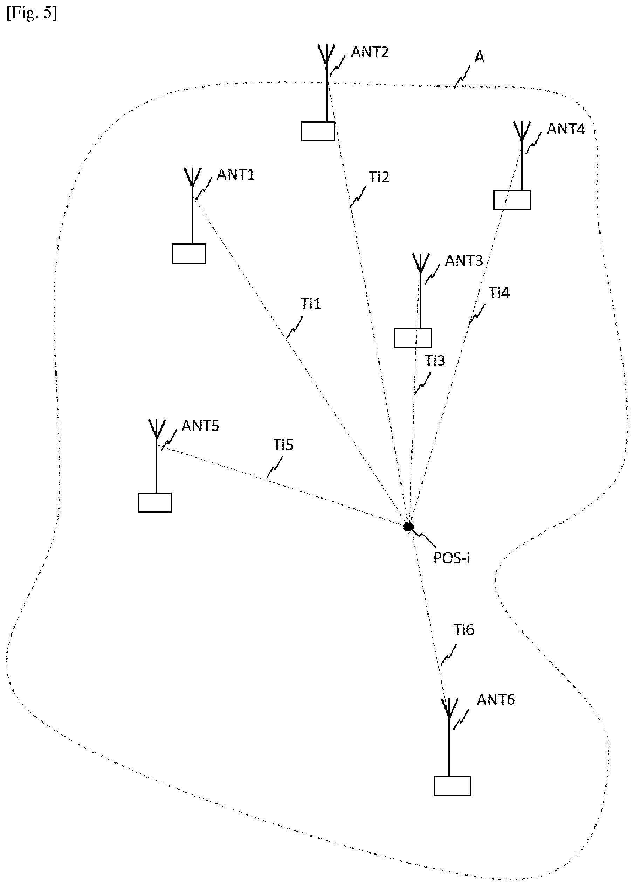

La **Fig. 5** illustre un enregistrement dans la base de données du dispositif de localisation S, lors d'une phase d'apprentissage, pour une position POS-i d'un objet OBJ situé dans le plan A. L'objet OBJ émet des signaux radioélectriques qui sont reçus par chacune des antennes ANT1 à ANT6. Ainsi, il est possible de caractériser la position POS-i par des informations représentatives de la transmission des signaux radioélectriques entre l'objet OBJ et chacune des antennes ANT1 à ANT6. Une émission de signaux électriques entre l'objet OBJ localisé en position POS-i vers l'antenne ANT1 est nommée transmission Ti1. De façon similaire, une émission de signaux électriques entre l'objet OBJ localisé en position POS-i vers l'antenne ANT2 est nommée Ti2. Plus largement, une émission de signaux électriques entre l'objet OBJ localisé en position POS-i vers l'antenne ANTj est nommée transmission Tij. Lors de la phase d'apprentissage et pour chaque enregistrement d'une position réelle dans la base, le niveau RSS mesuré, le TDOA mesuré, les coordonnées X et Y relevées par GPS (du sigle anglais « Global Positioning System » et qui signifie « système de positionnement global par satellites») et un identifiant de la zone comprenant la position POS-i faisant l'objet de la mesure sont enregistrées, pour chacune des antennes, de sorte à constituer ensemble un échantillon représentatif de la transmission Tij dans la base de données du dispositif de localisation S (i étant un indice de position de l'objet et j étant un indice représentatif d'une antenne).

Une phase d'apprentissage comprend l'enregistrement de toutes les positions réelles susceptibles d'être représentées dans la base de données. Ainsi, pour chaque position POS-i des positions POS-1 à POS-n, un enregistrement est réalisé, pour chacune des antennes parmi les antennes ANT1 à ANT6, selon le mode opératoire précédemment décrit et la base comprend donc *n* x *k* enregistrements si *n* est le nombre de positions et *k* est le nombre d'antennes. La phase d'apprentissage comprend en outre un entraînement éventuel de l'algorithme de classification du classifieur RFCM, ainsi que l'entraînement des réseaux de neurones NN, pour chacune des zones ZONE1 à ZONE6 du plan A découpé. Lors de l'entraînement de ces modèles d'apprentissage supervisé (machine learning), les algorithmes exécutés établissent les paramètres minimisant la fonction de coût pour chacun des modèles. La fonction permet de mesurer la performance des modèles implémentés.

Selon un mode réalisation de l'invention, le classifieur RFCM est statique et opère sans entraînement. Selon une variante, le classifieur RFCM est configuré pour opérer après une phase d'entraînement.

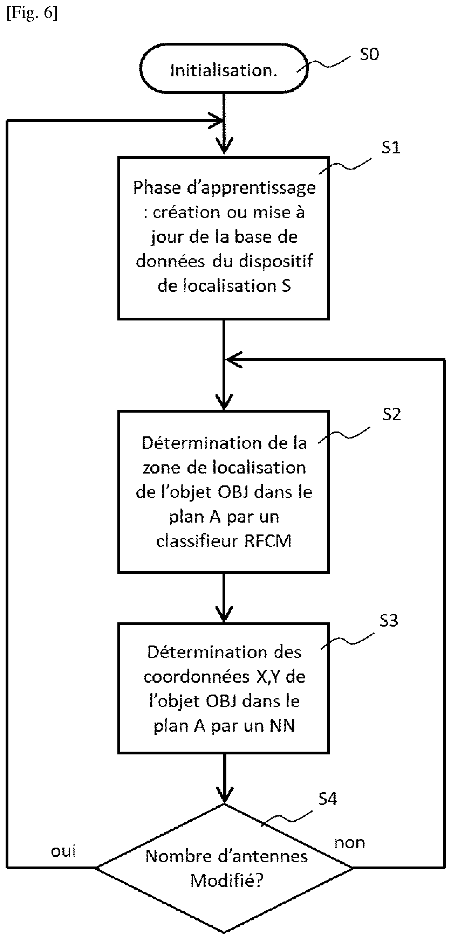

La **Fig. 6** est un ordinogramme illustrant le procédé selon un mode de réalisation de l'invention.

Une étape d'initialisation **S0** correspond à une configuration complète de l'ensemble des éléments décrits de sorte à ce que ces éléments puissent opérer conjointement. Ainsi, au terme de l'étape S0, le ou les objets OBJ sont configurés pour émettre des signaux radioélectriques vers les antennes ANT1 à ANT6 du réseau de télécommunications N et le dispositif de localisation est initialisé pour procéder à une phase d'apprentissage suivie d'une ou plusieurs éventuelles phases de localisation d'un objet OBJ dans le plan A. Les antennes ANT1 à ANT6 et les dispositifs reliés à chacune des antennes sont configurés pour la réception de signaux radioélectriques émis par un ou plusieurs objets OBJ situés dans le plan A. Le dispositif de localisation S est configuré pour recevoir, depuis chacun des dispositifs connectés aux antennes ANT1 à ANT6, une ou plusieurs informations représentatives de la transmission entre un objet OBJ et une antenne parmi les antennes ANT1 à ANT6. Ainsi, un dispositif relié à une antenne est en capacité d'envoyer au dispositif de localisation S, via le réseau de télécommunications N, une valeur de RSS et une valeur de TDOA représentatives de la transmission de signaux radioélectriques depuis un objet OBJ situé à une position définie par sa longitude X et sa latitude Y, dans le plan A. Une phase d'apprentissage est ensuite réalisée lors de l'étape **S1.** Pendant cette étape, tous les objets OBJ identifiables sur le réseau de télécommunications N et dans le plan A, à partir d'informations reçues par une ou plusieurs antennes parmi les antennes ANT1 à ANT6 font l'objet d'un ou plusieurs enregistrements dans la base de données du dispositif de localisation S. Lors de cette phase d'apprentissage, les positions réelles des objets pendant un enregistrement sont déterminées par un dispositif de localisation du type GPS. Selon un mode de réalisation préféré de l'invention, un objet OBJ transmet ses coordonnées X et Y vers les antennes disposées dans le plan A. Selon une variante du mode de réalisation, les coordonnées X et Y sont relevées pendant une phase de mesure et enregistrées dans la base manuellement ou automatiquement, postérieurement à la mesure. Lors de cette phase d'apprentissage, des modèles dits de « machine learning » sont entraînés au sein du dispositif de localisation S. Le terme « machine learning » est à interpréter ici comme un ensemble de méthodes et statistiques pour apprendre à partir de données. Un premier modèle de machine learning est un modèle de classification, encore appelé classifieur, qui, à partir des valeurs de RSS et de TDOA représentatives des transmissions de signaux radioélectriques émis par les objets, permet de déterminer, lors d'une phase de localisation d'un objet OBJ, dans quelle zone du plan A découpé se situe cet objet. Pour ce faire, le dispositif de localisation S comprend un module classifieur RFCM implémentant un algorithme de classification. Un second modèle de machine learning mis en œuvre dans le dispositif de localisation S implémente une régression appliquée à une zone, permettant d'estimer la position d'un objet dans le plan A, sous forme de coordonnées X et Y.

Un critère d'appartenance d'un objet OBJ à une zone est défini par le premier modèle de machine learning. Il s'agit d'un critère flou. La sortie du modèle est une probabilité d'appartenir à une zone, définie pour chacune des zones ZONE1 à ZONE6. Le premier modèle implémente un algorithme de classification de type RFC (du sigle anglais « Random Forest Classifier » et qui signifie « forêt d'arbres décisionnels »). L'algorithme de forêts d'arbres décisionnels effectue un apprentissage sur de multiples arbres de décision entraînés à partir de sous-ensembles de données légèrement différents. Selon le mode de réalisation préféré de l'invention, il est considéré pour ce premier modèle 400 arbres, et 8 échantillons minimum avant la création d'un nouvel arbre. En outre, la profondeur maximale d'un arbre est 90. Le second modèle de machine learning utilisé par le dispositif de localisation S est un réseau de neurones encore communément appelé NN (du sigle anglais « Neural Network »). Il est entendu par «réseaux de neurones » un graphe d'objets élémentaires spécifiques pour la régression et la classification supervisée. Le dispositif de localisation S implémente autant de réseaux de neurones récurrents NN que de zones présentes dans le plan A. Ainsi, si la découpe est effectuée selon l'algorithme de Voronoï, il y a autant de réseaux de neurones récurrents NN implémentés dans le dispositif de localisation S que d'antennes implantées dans le plan A. Selon l'exemple décrit, le dispositif de localisation S utilise 6 NN. Selon le mode de réalisation préféré de l'invention, chacun des NN est caractérisé par une taille de vecteur d'entrée et une taille de vecteur de sortie et implémente une couche dense composée de *m* neurones, *m* étant un entier positif correspondant à la moitié de la somme de la taille du vecteur d'entrée et de la taille du vecteur de sortie, la couche dense étant entièrement connectée, une couche de dropout de 50% et une couche de sortie de dimension deux. Selon une variante du mode de réalisation, le second modèle implémente des NN utilisant un modèle de régression multi-sorties afin de prédire la position d'un objet OBJ, en termes de coordonnées X et Y dans le plan A. Cette stratégie consiste à utiliser deux sous-modèles de régression, soit un pour chacune des cibles X et Y. Un sous-modèle est alors utilisé pour estimer la coordonnée X d'un objet situé dans le plan A, et l'autre sous-modèle est utilisé pour estimer la coordonnée Y de ce même objet dans le plan A.

La phase d'apprentissage exécutée à l'étape S1 est adaptative et évolutive. Elle peut être réexécutée lorsqu'une nouvelle antenne est implantée ou mise en fonction ou encore lorsqu'une antenne est supprimée ou est en panne. Lorsque le nombre d'antennes est ainsi modifié, une nouvelle découpe du plan A doit être réalisée avant l'entraînement des deux modèles de machine learning à partir de nouvelles données enregistrées dans la base de données.

Au terme de la phase d'apprentissage, il est possible de localiser un objet OBJ quelconque, situé dans le plan, en utilisant le dispositif de localisation S dont les modèles d'apprentissage supervisés ont été entraînés. Astucieusement et selon l'invention, la localisation d'un objet OBJ dans le plan grâce au dispositif de localisation S est réalisée en deux étapes. La zone dans laquelle se situe l'objet OBJ à localiser est d'abord définie lors d'une étape **S2** où le classifieur RFCM exécute le premier modèle de machine learning pour obtenir, pour chacune des six zones de l'exemple décrit, une valeur indiquant la probabilité de présence de l'objet OBJ dans la zone. Il est alors considéré que l'objet OBJ à localiser se situe dans la zone pour laquelle il est déterminé la valeur de probabilité de présence la plus forte.

La localisation précise de l'objet OBJ dans le plan A, en termes de coordonnées X et Y, est ensuite réalisée lors d'une seconde étape **S3** en exécutant le modèle NN, implémenté par le dispositif de localisation S, et correspondant à la zone identifiée comme comprenant l'objet OBJ à localiser. Avantageusement, si deux zones parmi les zones ZONE1 à ZONE6 présentent des valeurs de probabilité de présence peu discriminantes, les deux réseaux de neurones NN correspondant aux deux zones sont utilisés et il est calculé la moyenne des deux positions ainsi déterminées pour déterminer des coordonnées finales X et Y dans le plan A (soit la position de l'objet OBJ à localiser).

Selon un mode de réalisation préféré de l'invention, un objet à localiser est identifié par le dispositif de localisation S au moyen d'un identifiant unique transmis par l'objet OBJ vers les antennes ANT1 à ANT6. Les signaux radioélectriques transmis depuis un objet OBJ codent des informations représentatives de cet objet et éventuellement des informations représentatives de son utilisation. Par exemple, si l'objet OBJ est un smartphone, un identifiant unique du smartphone ou d'un service de téléphonie souscrit est transmis parmi les informations codées sous forme de signaux radioélectriques, outre des informations codant la voix. Les informations sont réunies sous forme de trames de données qui peuvent être traitées ultérieurement par tout dispositif compatible avec le réseau de communication N et le dispositif de localisation S.

Ainsi, quand un utilisateur du dispositif de localisation S souhaite localiser un objet OBJ, il renseigne un identifiant unique de l'objet OBJ par configuration du dispositif de localisation S, de sorte que l'ensemble des données émises par l'objet OBJ ainsi identifié soient analysables par le dispositif de localisation S. Les dispositifs respectivement reliés aux antennes ANT1 à ANT6 convertissent les signaux radioélectriques reçus en trames de données qui sont ensuite transmises au dispositif de localisation S. La configuration du dispositif de localisation S peut être réalisée par tout moyen classiquement utilisé pour ce faire, tel que, par exemple, une interface utilisateur implémentée grâce à un terminal relié au dispositif de localisation S, ou intégré à ce dernier.

Au terme d'une opération de localisation d'un objet OBJ, il est vérifié si le nombre d'antennes utilisées dans le réseau est constant. Cette vérification se fait par scrutation des trames qui transitent sur le réseau de télécommunications N. Si le nombre d'antennes varie, du fait d'une adjonction ou d'un retrait d'une antenne, suite à une réparation ou à la survenance d'une panne, par exemple, une nouvelle phase d'apprentissage est réalisée (retour à l'étape S1). Dans le cas contraire, une nouvelle opération de localisation d'un objet OBJ peut être initiée (retour à l'étape S2).

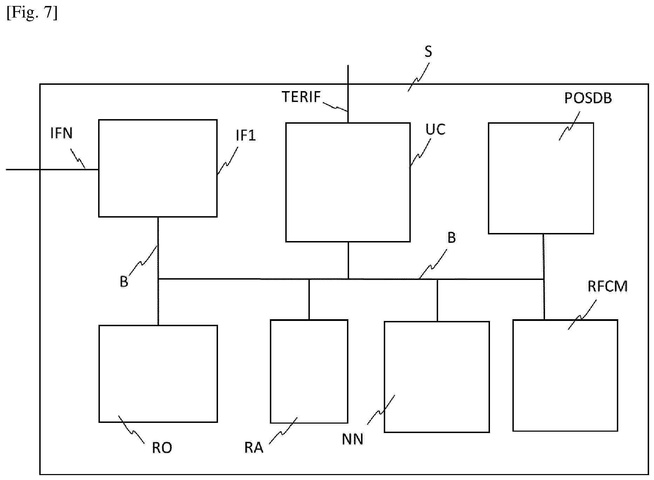

La **Fig. 7** illustre l'architecture interne du dispositif S de localisation d'un objet OBJ dans le plan A, implémentant le procédé de localisation précédemment décrit. Le dispositif de localisation S comprend une unité de contrôle UC, un module de mémoire non volatile RO pour le stockage de paramètres de configuration et de codes logiciels exécutables, un module de mémoire volatile RA pour l'exécution de codes logiciels exécutables par l'unité de contrôle UC, un module de mémoire configuré pour implémenter la base de données POSDB, une pluralité de modules de réseaux de neurones NN, un module classifieur RFCM et une interface de communication réseau IF1 configurée pour être reliée au réseau de télécommunications N par l'intermédiaire d'un port de connexion IFN. L'interface de communication IF1 est configurée pour une connexion à un réseau étendu et comprend un dispositif d'interconnexion de type « bridge ». Selon une variante du mode de réalisation, l'interface IF1 peut être de type sans fil et comprendre un système antennaire. L'interface de connexion IF1 au réseau de télécommunications N permet le transfert de données depuis et vers les dispositifs reliés à chacune des antennes ANT1 à ANT6. Les modules internes du dispositif de localisation S 100 sont reliés ensemble par un bus de contrôle / commande / données commun B, géré par l'unité de contrôle UC. L'unité de contrôle UC comprend en outre une interface TERIF adaptée à la connexion d'un terminal de configuration et de visualisation externe, lequel comprend, par exemple, un écran et un clavier. Le dispositif de localisation S comprend en outre tous les modules communément utilisés pour le fonctionnement d'une unité de contrôle, tels que, à titre d'exemple, une source d'alimentation, un circuit d'interface d'alimentation avec supervision des lignes d'alimentations, un circuit de remise à zéro, un ou plusieurs circuits d'horloge, des ports d'entrées-sorties, des ports d'interruption, des buffers de gestion des bus. Cette liste n'étant pas exhaustive.

Lors d'une phase d'apprentissage, les informations RSS et TDOA, ainsi que les coordonnées X et Y d'un objet OBJ dans le plan A, représentatives d'une transmission Tij entre cet objet OBJ positionné à une position POS-i du plan A et une antenne ANTi parmi les antennes ANT1 à ANT6, sont reçues par l'interface IF1 connectée au réseau de télécommunications N via le port de connexion IFN. Ces informations sont ensuite enregistrées dans le module de base de données POSDB, sous contrôle de l'unité de contrôle UC. Selon une variante du mode de réalisation, les coordonnées X et Y correspondant aux positions faisant l'objet d'une mesure pour enregistrement dans la base de données POSDB sont enregistrées ultérieurement, par le biais d'une interface utilisateur, un lecteur de carte à mémoire ou tout autre moyen. Lorsque toutes les informations ont été saisies sous forme d'échantillons dans la base de données POSDB, les modèles d'apprentissage supervisé ou encore modèle de machine learning sont entraînés sous contrôle de l'unité de contrôle CU qui exécute les algorithmes correspondant conjointement avec le module RFCM pour le classifieur et les réseaux de neurones NN. L'apprentissage ainsi réalisé sur un nombre important de couples entrée-sortie permet de disposer de nombreuses valeurs de RSS et de TDOA pour une position connue et de s'affranchir des valeurs de RSS et TDOA anormales ou bruitées du fait de l'environnement.

Lors d'une phase de géolocalisation d'un objet OBJ par le dispositif de localisation S, et après qu'un utilisateur du dispositif de localisation ait eu renseigné un identifiant de l'objet OBJ à localiser, l'interface de communication IF1 filtre les informations qui transitent sur le réseau de télécommunications N et transmettent tout ou partie des trames en provenance de l'objet OBJ à localiser à l'unité de contrôle UC qui les analyse et qui opère une extraction des informations RSS et TDOA en provenance de l'objet OBJ et à destination des différentes antennes ANT1 à ANT6. Ces informations représentatives des transmissions entre l'objet OBJ à localiser et les antennes ANT1 à ANT6 sont transmises au module classifieur RFCM qui opère une régression, à partir des données enregistrées dans la base de données POSDB, de sorte à définir des valeurs de probabilité de présence de l'objet OBJ dans chacune des zones ZONE1 à ZONE6. L'unité de contrôle UC analyse ensuite ces valeurs et identifie la zone parmi les zones ZONE1 à ZONE6 pour laquelle la valeur de probabilité de présence est la plus élevée parmi toutes les valeurs calculées. L'unité de contrôle exécute ensuite les algorithmes du réseau de neurones NN en correspondance de cette zone, pour définir les coordonnées X et Y de l'objet dans le plan A. Ces coordonnées sont ensuite transmises au terminal connecté à l'interface TERIF, pour affichage et/ou enregistrement. Une nouvelle procédure de localisation peut alors être initiée, pour le même objet OBJ, ou un objet OBJ similaire, présent dans le plan A.

L'invention ne se limite pas aux seuls modes de réalisation décrits mais à tout procédé de localisation d'un objet dans un plan, le procédé comprenant une première phase dite phase d'apprentissage pour renseigner une base de données, et une seconde phase dite phase de localisation, la phase de localisation utilisant un classifieur opérant à partir de la base de données comprenant des informations représentatives de la transmission de signaux entre l'objet et des antennes de réception, pour déterminer une probabilité de localisation de l'objet dans des zones du plan, la phase de localisation utilisant en outre un réseau de neurones, pour déterminer, pour la zone du plan pour laquelle la probabilité de localisation est la plus élevée, la position de l'objet sous forme de coordonnées dans le plan. L'invention concerne également un dispositif de localisation implémentant le procédé ainsi qu'un programme d'ordinateur mettant en œuvre le procédé et un dispositif de stockage comprenant un tel programme.

## Revendications

1. Procédé de localisation d'un objet (OBJ) dans un plan (A), l'objet (OBJ) émettant des signaux radioélectriques vers une pluralité d'antennes (ANT1, ANT2,..., ANT6) de réception positionnées dans le plan, les antennes de réception étant chacune combinées à un dispositif de réception configuré pour délivrer au moins une information (RSS, TDOA) représentative de la transmission desdits signaux depuis l'objet (OBJ) vers ladite antenne (ANT1, ANT2,..., ANT6), le procédé comprenant :
- i) découper l'espace en zones (ZONE1, ZONE2, ..., ZONE6) comprenant chacune une seule des antennes de réception (ANT1, ANT2,..., ANT6),
- ii) enregistrer, dans une base de données (POSDB), pour chaque position parmi une pluralité de positions (POS-1, POS-2,...POS-n) connues de l'objet (OBJ) dans le plan, l'au moins une information (RSS, TDO) représentative de la transmission desdits signaux depuis l'objet (OBJ) vers chacune des antennes (ANT1, ANT2,..., ANT6), la position de l'objet sous forme de coordonnées (X,Y) dans le plan (A), et un identifiant de la zone,
- iii) entraîner éventuellement un classifieur (RFCM) à déterminer une probabilité de localisation d'un objet dans chacune des zones (ZONE1, ZONE2, ..., ZONE6) du plan (A), et entraîner un réseau de neurones (NN) à déterminer une localisation d'un objet (OBJ) dans chacune des zones du plan (A), à partir des informations enregistrées dans la base de données (POSDB),
le procédé comprenant en outre :
- iv) recevoir, depuis l'objet (OBJ) et par la pluralité d'antennes (ANT1, ANT2,..., ANT6), des signaux radioélectriques et définir au moins une information (RSS, TDOA) représentative de la transmission de signaux depuis l'objet (OBJ) vers chacune des antennes (ANT1, ANT2,..., ANT6),
- v) déterminer, par le classifieur (RFCM), à partir de l'ensemble des informations (RSS, TDOA) représentatives de la transmission des signaux entre l'objet et chaque antenne, une probabilité de localisation de l'objet (OBJ) dans chacune des zones du plan (A),
- vi) déterminer, grâce à un réseau (NN) de neurones, pour la zone pour laquelle la probabilité de localisation est la plus élevée, la position de l'objet (OBJ) sous forme de coordonnées dans le plan (A).

2. Procédé de localisation selon la revendication précédente, la découpe du plan en zones (ZONE1, ZONE2, ..., ZONE6) étant réalisée selon un diagramme de Voronoï à partir d'un ensemble discret de points définis dans le plan par les positions respectives des antennes de réception (ANT1, ANT2,..., ANT6).

3. Procédé selon la revendication 1 ou 2, pour lequel le classifieur (RFCM) utilise une méthode d'apprentissage statistique utilisant une forêt d'arbres décisionnels.

4. Procédé selon l'une quelconque des revendications 1 à 3, utilisé pour la localisation d'un objet (OBJ) connecté à un réseau de télécommunications (N).

5. Procédé selon l'une quelconque des revendications 1 à 4, la définition de la position de l'objet sous forme de coordonnées dans le plan (A) réalisée à l'étape ii) étant établie par un dispositif de localisation de type GPS.

6. Dispositif (S) de localisation d'un objet (OBJ) dans un plan (A), l'objet (OBJ) émettant des signaux radioélectriques vers une pluralité d'antennes (ANT1, ANT2,..., ANT6) de réception positionnées dans le plan (A), les antennes (ANT1, ANT2,..., ANT6) de réception étant chacune positionnées dans une zone (ZONE1, ZONE2, ..., ZONE6) prédéfinie du plan (A) contenant une seule antenne (ANT1, ANT2,..., ANT6) et les antennes étant chacune combinées à un dispositif de réception configuré pour délivrer au moins une information (RSS, TDOA) représentative de la transmission desdits signaux depuis l'objet (OBJ) vers ladite antenne (ANT1, ANT2,..., ANT6), le dispositif de localisation (S) comprenant une base de données (POSDB) comprenant pour chaque position parmi une pluralité de positions (POS-1, POS-2,...POS-n) connues de l'objet (OBJ) dans le plan (A), au moins une information (RSS, TDOA) représentative de la transmission desdits signaux depuis l'objet (OBJ) vers chacune des antennes (ANT1, ANT2,..., ANT6), la position de l'objet (OBJ) sous forme de coordonnées (X, Y) dans le plan (A), et un identifiant (ZONE1ID, ZONE2ID,..., ZONE6ID) d'une zone comprenant ladite position (POS-1, POS-2,...POS-n) parmi une pluralité de zones (ZONE1, ZONE2, ..., ZONE6) du plan (A), le dispositif (S) de localisation étant **caractérisé en ce qu'**il comprend en outre :
- une interface (IF1) de réception configurée pour recevoir, au moins une information (RSS, TDOA) représentative de la transmission de signaux depuis l'objet (OBJ) vers chacune des antennes de la pluralité d'antennes (ANT1, ANT2,..., ANT6),
- un classifieur (RFCM) configuré pour déterminer, à partir de l'ensemble des informations (RSS, TDOA) représentatives de la transmission des signaux entre l'objet (OBJ) et chaque antenne (ANT1, ANT2,..., ANT6), une probabilité de localisation de l'objet dans chacune des zones (ZONE1, ZONE2, ..., ZONE6) du plan (A),
- un réseau (NN) de neurones pour déterminer, pour la zone pour laquelle la probabilité de localisation de l'objet (OBJ) est la plus élevée, la position de l'objet sous forme de coordonnées dans le plan (A).

7. Dispositif (S) de localisation selon la revendication précédente, le classifieur (RFCM) étant configuré pour implémenter une méthode d'apprentissage statistique utilisant une forêt d'arbres décisionnels.

8. Produit programme d'ordinateur **caractérisé en ce qu'**il comprend des instructions de codes de programme pour exécuter les étapes du procédé selon l'une quelconque des revendications 1 à 5, lorsque ledit programme est exécuté par un processeur.

9. Support de stockage d'informations comprenant un produit programme d'ordinateur selon la revendication précédente.
